(19) **Europäisches Patentamt / European Patent Office / Office européen des brevets**

(11) **EP 4 621 253 A1**

(12) # EUROPEAN PATENT APPLICATION
published in accordance with Art. 153(4) EPC

(43) Date of publication:
24.09.2025 Bulletin 2025/39

(21) Application number: 23891335.4

(22) Date of filing: 27.10.2023

(51) International Patent Classification (IPC):
*F16C 33/51* (2006.01)   *F03D 1/06* (2006.01)
*F03D 80/70* (2016.01)   *F16C 19/36* (2006.01)
*F16C 33/56* (2006.01)

(52) Cooperative Patent Classification (CPC):
F03D 1/06; F03D 80/70; F16C 19/36; F16C 33/51;
F16C 33/56

(86) International application number:
PCT/JP2023/038964

(87) International publication number:
WO 2024/106182 (23.05.2024 Gazette 2024/21)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 18.11.2022 JP 2022185073
21.11.2022 JP 2022186044

(71) Applicant: NTN Corporation
Osaka-shi Osaka 530-0005 (JP)

(72) Inventors:
• NISHIDA Yuta
Kuwana-shi, Mie 511-8678 (JP)
• INOUE Yasuyuki
Kuwana-shi, Mie 511-8678 (JP)

(74) Representative: Eder Schieschke & Partner mbB
Patentanwälte
Elisabethstraße 34
80796 München (DE)

(54) **ROLLER BEARING**

(57)    A segment 10 is an injection molded product of a resin material integrally comprising: a plurality of pillar portions 13 arranged spaced apart in a circumferential direction; a pair of arcuate portions 11 and 12 arranged spaced apart in an axial direction and coupled to each other through intermediation of the plurality of pillar portions 13; and claw portions 15 and 16 provided to the pillar portion 13, and a circumferential angle θ corresponding to a circumferential dimension of the segment 10 is 5° or more and 30° or less.

FIG. 2

EP 4 621 253 A1

**Description**

Technical Field

The present invention relates to a roller bearing, in particular, a roller bearing used for supporting a large-sized rotation shaft having a large diameter, such as a main shaft of a wind power generator, in a freely rotatable manner.

Background Art

A roller bearing includes an inner ring and an outer ring, a plurality of rolling elements (rollers) interposed between raceway surfaces of the inner ring and the outer ring, and a cage having an annular shape in which a plurality of pockets configured to house the rollers are provided spaced apart in a circumferential direction of the bearing. Among such roller bearings, a roller bearing for supporting a main shaft of a large-sized machine device, such as a wind power generator or an industrial machine, needs to support a heavy load. Thus, a constituent member of the roller bearing is inevitably large, and a bearing outer diameter (outer diameter of the outer ring) may exceed 1 m. In this case, when a cage formed of a single member having an annular shape is employed, it may be difficult to efficiently produce such a cage with high accuracy, and also tasks of transportation, installation in between an inner ring and an outer ring, and the like may be burdensome. Therefore, particularly for a cage for a large-sized roller bearing having an outer diameter exceeding 1 m, for example, so-called a segment cage, which is formed of a plurality of segments having an arc shape (fan-like shape) arranged in a row in a circumferential direction, is preferably used, as described in JP 2009-52746 A (Patent Literature 1).

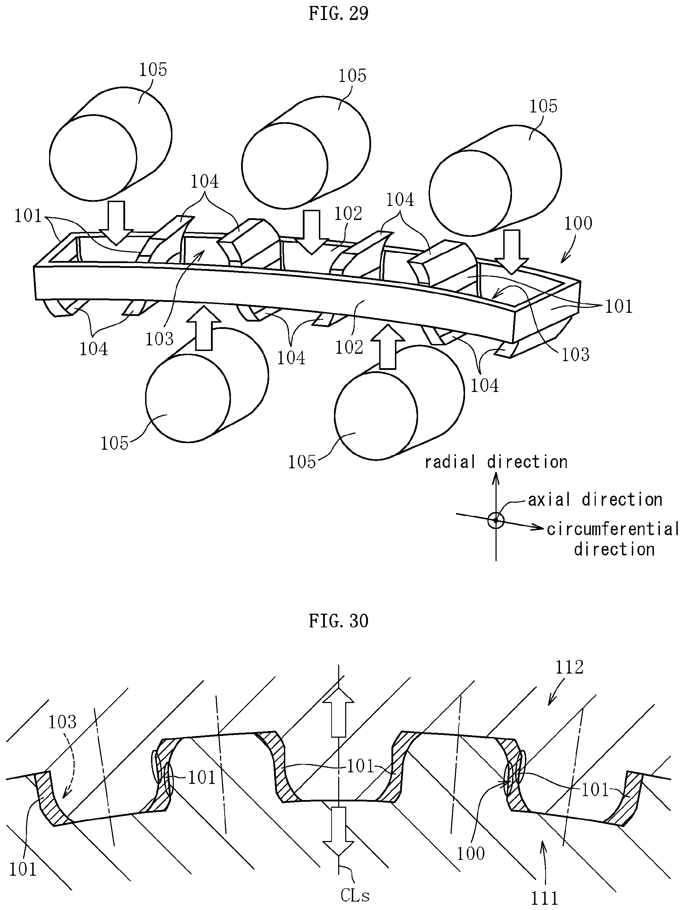

An example of a segment is illustrated in FIG. 29. The segment 100 includes a plurality of pillar portions 101 arranged spaced apart in a circumferential direction, and a pair of arcuate portions 102 arranged spaced apart in an axial direction of a bearing and coupled to each other through intermediation of the plurality of pillar portions 101. A pocket 103 that is a housing portion for a roller 105 is formed between two pillar portions 101 that are adjacent to each other and a pair of arcuate portions 102. The segment 100 includes claw portions 104 that restrict the roller housed in the pocket 103 from falling off. The claw portions 104 are provided at an end portion on a radially outer side and/or at an end portion on a radially inner side of the pillar portion 101, depending on a guide type of the cage. The segment 100 illustrated in FIG. 29 is a segment forming a cage of a rolling element (roller) guide type in which the claw portions 104 are provided at both of the end portions on a radially outer side (upper side in the drawing) and a radially inner side (lower side in the drawing). The segment 100 having such a configuration is generally formed as an injection molded product of resin that can be efficiently mass-produced.

As conceptually illustrated in FIG. 30, the segment 100 made of resin illustrated in FIG. 29 is injection molded, in general, using a set of molding dies (radially inner side die 111 and radially outer side die 112) that move closer to and away from each other along a straight line (segment center line) CLs extending in a radial direction passing through a circumferential center portion of the segment 100. In this case, directions of extracting the segment 100 from the dies 111, 112 are radial directions as indicated by hollow arrows in the drawing, which may result in so-called a forcible extraction. In the forcible extraction, an undercut portion may be formed depending on a shape, size and the like of the segment 100, with the result that the extraction (mold-release) of the segment 100 from the dies 111, 112 cannot be performed without deformation (elastic deformation) of a part of the segment 100.

Citation List

Patent Literature: JP 2009-52746 A

Summary of Invention

Technical Problem

In a case of employing an injection molded product of resin as the segment 100 for a large-sized roller bearing having an outer diameter exceeding 1 m, in order to provide the segment 100 with mechanical strength for withstanding a heavy load, some measures are taken. Examples of such measures include use of a resin material containing super engineering plastics having a large elastic modulus as a main raw material, and thickening of each portion of the segment as much as possible. In the case in which such measures are taken, however, elastic deformation of the segment 100 hardly occur (an elastic deformation amount of each part of the segment becomes smaller). Thus, when the segment 100 is forcibly extracted from the molding dies 111, 112, defects such as cracking or chipping may be liable to occur in the segment 100.

In the case of the segment 100 illustrated in FIG. 29 and FIG. 30, the undercut portion which may cause the forcible extraction is a part of a side surface (pocket surface) forming the pocket 103 in some of the pillar portions 101.

Specifically, the undercut portion may be the portions surrounded by hollow circles in FIG. 30, at four positions in total. Thus, providing a so-called draft to the pocket surfaces described above can avoid the forcible extraction. When the draft is provided, however, strength of the pillar portion 101 and thus strength of the segment 100 decrease as a cross-sectional area (thickness) of the pillar portion 101 is reduced compared to a case in which the draft is not provided. In a case in which the segment 100 is injection molded by using the molding dies 111, 112 described above, it is required to provide a large draft to a pocket surface of the pillar portion 101 located apart from the segment center line CLs in a circumferential direction. Thus, the decrease in the strength caused by the reduction in the cross-sectional area may reach such a level that causes a problem in use.

Further, in the segment cage, abrasion on circumferential end surfaces of the segments caused by the segments colliding each other, and abrasion on a pocket surface caused by rotation of the roller housed in the pocket and sliding of the segment may occur. The abrasion described above increases gaps between the segments and gaps between the segment and the roller, causing abnormal sound and abnormal vibration. Further, when the roller bearing is used under a state in which abrasion powder generated by such abrasion adheres to a raceway surface and the like of the inner ring and the outer ring, the raceway surface or the roller rolling surface (outer peripheral surface of the roller) may be damaged.

In light of the aforementioned situation, a first object is to provide a roller bearing that can support a shaft to be supported with high accuracy for a long period of time, by configuring a segment, which is an injection molded product of a resin material forming a cage, such that smooth mold-release is enabled and a decrease in strength can be controlled in a range in which no problem occurs in use.

Further, a second object is to provide a roller bearing that can reduce abrasion by collision of the segments and abrasion by sliding of the roller and the segment.

Solution to Problem

According to the first invention of the present application devised in order to achieve the above-mentioned object, there is provided a roller bearing, comprising:

an inner ring and an outer ring;
a plurality of rollers interposed between raceway surfaces of the inner ring and the outer ring; and
a cage having an annular shape configured to hold the plurality of rollers spaced apart in a circumferential direction,
wherein the cage is formed of a plurality of segments arranged in a circumferential direction,
wherein the segments are each an injection molded product of a resin material integrally comprising:

a plurality of pillar portions arranged spaced apart in a circumferential direction;
a pair of arcuate portions arranged spaced apart in an axial direction and coupled to each other through intermediation of the plurality of pillar portions;
claw portions, which are provided to the pillar portions, and are configured to be in contact with the rollers housed in pockets each formed by two pillar portions that are adjacent to each other and the pair of arcuate portions to restrict motion of the rollers in a radial direction, and

wherein a circumferential angle θ, which corresponds to a circumferential length, of each of the segments is set to be 5° or more and 30° or less.

When the circumferential angle θ of each of the segments, which are each an injection molded product of a resin material integrally comprising the plurality of pillar portions, the pair of arcuate portions, and the claw portions, is set to be 30° or less as described above, a decrease in the strength of the segment caused by reduction in the cross-sectional area of the pillar portion can be controlled in a range in which no problem occurs in use, even when a so-called draft is provided to (a portion to mold) the pillar portion in order to avoid forcible extraction in a case in which the segment is injection molded with resin by using a set of molding dies which move closer to and away from each other along a center line CLs of the segment. Meanwhile, when the circumferential angle θ is less than 5°, a pocket which has a desired load capacity to house the roller cannot be formed. Thus, when the circumferential angle θ of the segment is set to be 5° or more and 30° or less, the segment can be smoothly mold-released and, a decrease in the strength of the segment can be controlled in a range in which no problem occur in use.

A pocket surface being a surface of the pillar portion forming the pocket may comprise a slope inclined with respect to a pocket center line extending in a radial direction passing through a circumferential center portion of the pocket formed by the pocket surface. This slope corresponds to a so-called draft that is provided in order to enable smooth extraction of the segment from the molding dies (to avoid forcible extraction). When an inclination angle α of the slope is 15° or less, a decrease in strength caused by the reduction in the cross-sectional area (thickness) of the pillar portion, to which the slope is provided, can be controlled in a range in which no problem occurs in use.

The configuration described above can be preferably employed in a case in which a resin material to be used for injection molding of the segment comprises polyether ether ketone (PEEK) blended with a carbon fiber or a glass fiber as a main raw material, that is, a case in which the segment that is an injection molded product of resin is advantageously highly reinforced but it is difficult to perform the forcible extraction of the segment from the molding dies due to a large elastic modulus of the segment.

A roller bearing according to the first invention of the present application may comprise a coupling member having an annular shape configured to couple the plurality of segments in a circular shape. With this configuration, a change in the posture of the segment and misalignment of the segment can be restricted, thereby being capable of improving the ease of assembly of the roller bearing. In this case, the segment can be provided with an engagement portion configured to be engaged with the coupling member so as to be freely attachable and detachable, and the engagement portion can be provided at both circumferential end portions of either one of the pair of arcuate portions forming the segment.

In a case in which the roller is a tapered roller, one of the pair of arcuate portions forming the segment is a large-diameter arcuate portion, and another one of the pair of arcuate portions is a small-diameter arcuate portion having a curvature radius smaller than that of the large-diameter arcuate portion. In this case, the large-diameter arcuate portion can be integrally provided with a projecting portion comprising the engagement portion. The small-diameter arcuate portion can be provided with an attachment portion for an annular jig configured to hold the plurality of segments in a circular shape form.

The first invention can be suitably employed in, for example, a roller bearing, which is to be used for supporting a main shaft of a wind power generator, and in which the outer ring has an outer diameter of 1 m or more.

Further, according to the second invention of the present application devised in order to achieve the above-mentioned second object, there is provided a roller bearing, comprising:

> an inner ring and an outer ring;
> a plurality of rollers arranged between the outer ring and the inner ring; and
> a plurality of segments, which comprise pockets configured to house the rollers, and are arranged sequentially in a circumferential direction between the outer ring and the inner ring to form a cage,
> wherein the segments have a surface roughness of Ra 6.3 $\mu$m or less on two end surfaces of adjacent segments opposed to each other in a circumferential direction, and have a surface roughness of Ra 1.6 $\mu$m or less on an inner side of the pocket. The segments may be of a roller guide or may be of an outer ring guide.

In the roller bearing according to the second invention, the segments have a surface roughness of Ra 6.3 $\mu$m or less on two end surfaces of adjacent segments opposed to each other in a circumferential direction, and has a surface roughness of Ra 1.6 $\mu$m or less on an inner side of the pocket. Thus, the roller bearing according to the second invention can decrease abrasion by collision of the segments and abrasion by sliding of the roller and the segment. Accordingly, the amount of abrasion of the segment can be reduced, thereby being capable of reducing a risk of failure in the bearing.

In the second invention, the segment may have a linear expansion coefficient of $1.3 \times 10^{-5}$/°C or more and $1.7 \times 10^{-5}$/°C or less. In a case in which the segment largely expands, a circumferential dimension (including a gap, for example) between a plurality of segments becomes negative so that the segments are brought into contact with each other, and thus, the segments are assumed to thrust each other. However, when the configuration of the segment described above is employed, the situation as described can be avoided.

In the second invention, the cage comprises a gap between adjacent segments at least at one location, and a circumferential dimension of the gap at room temperature may be larger than 0.075% and smaller than 0.12% of a circumference of a circle having a center at an axis of the cage and passing through centers of circumferential end surfaces of the segments. Accordingly, even when the segment thermally expands, the gap can be secured.

In the second invention, the segment may be made of a resin comprising a filler agent. In this case, the filler agent may comprise at least any one of a carbon fiber or a glass fiber, and the resin may be polyether ether ketone (PEEK). Further, a filling ratio of the filler agent in the resin may be 20% by mass or more and 40% by mass or less. With those configurations, the segment may be formed of a resin such as polyether ether ketone, and a decrease in linear expansion coefficient, improvement in strength, and the like can be achieved by adding a filler agent.

In the second invention, the segment comprises a guide claw, a recess portion is formed at a position on a circumferentially inner side of a contact portion on the guide claw, and the recess portion is formed by a shrinkage sink generated in molding the segment. Thus, the recess portion can be formed without additional processing.

The cage of the second invention is configured such that, a guide claw is provided on a radially outer side of adjacent pillar portions of each pocket to allow insertion of the roller into the pocket from a radially inner side of the segment, a coupling member is arranged in an annular shape on a large-diameter-side side surface of each segment, and an engagement portion that engages the coupling member so as to be freely attachable and detachable is provided to each segment so that the segments are coupled. Accordingly, a concern such as falling-off of the roller in manufacturing the roller bearing can be decreased.

The roller bearing according to the second invention can be used, for example, as the main shaft described above in a main-shaft support structure for a wind power generator, comprising: a main shaft configured to rotate with a blade receiving wind power; and a bearing configured to support the main shaft in a freely rotatable manner. The main-shaft support structure for the wind power generator having such configuration comprises the roller bearing having various functions described above. Thus, various effects described above can be exerted.

In the above-mentioned main-shaft support structure for a wind power generator, a relationship of D>d is satisfied at least at one location on a rolling surface of each of the plurality of rollers, where D is a roller diameter, d is a distance between raceway surfaces of the inner ring and the outer ring at a measurement position for the roller diameter. Accordingly, a main-shaft support structure for a wind power generator, which has a long life and is highly reliable, can be obtained.

Advantageous Effects of Invention

According to the first invention, for a segment which is an injection molded product of a resin material forming a cage, smooth mold-release is enabled and a decrease in strength can be controlled in a range in which no problem occurs in use. Accordingly, a roller bearing that can support a shaft to be supported with high accuracy for a long period of time can be provided.

Further, according to the second invention, abrasion caused by collision of the segments forming the cage, sliding of the roller and the segment, and the like can be decreased.

Brief Description of Drawings

FIG. 1 is a longitudinal sectional view of a roller (tapered roller) bearing according to an embodiment of the first invention.

FIG. 2 is a perspective view of a segment incorporated in the tapered roller bearing illustrated in FIG. 1.

FIG. 3 is a sectional view of the segment illustrated in FIG. 2.

FIG. 4 is a partial enlarged view of FIG. 3.

FIG. 5 is a schematic sectional view of dies for molding the segment illustrated in FIG. 2.

FIG. 6 is a table for showing a relationship between a circumferential angle of the segment and a strength of a pillar portion.

FIG. 7 is a conceptual view for illustrating a main-shaft support structure for a wind power generator in which a roller bearing according to an embodiment of the second invention is incorporated.

FIG. 8 is a schematic perspective view of a segment forming the roller bearing according to the embodiment of the second invention.

FIG. 9 is a schematic longitudinal sectional view for illustrating a state in which the roller is inserted in the segment of FIG. 8.

FIG. 10 is a schematic transverse sectional view for illustrating revolution operation of a cage.

FIG. 11 is a schematic view of a part of the segment illustrated in FIG. 7, as viewed from an inner side of a pocket.

FIG. 12 is an enlarged sectional view of a forming part of the pocket in the segment illustrated in FIG. 7.

FIG. 13 is a longitudinal sectional view of a roller (tapered roller) bearing according to another embodiment of the present invention.

FIG. 14 is a perspective view of a segment incorporated in the tapered roller bearing illustrated in FIG. 13.

FIG. 15 is a sectional view for illustrating a state in which the tapered roller is inserted in the segment illustrated in FIG. 14.

FIG. 16 is a perspective view for illustrating a state in which an outer ring is removed from the tapered roller bearing illustrated in FIG. 13.

FIG. 17 is a perspective view for illustrating a procedure of assembling the tapered roller bearing illustrated in FIG. 13.

FIG. 18 is a perspective view of FIG. 17 as viewed from another direction.

FIG. 19 is a view for illustrating a relationship between the tapered roller and a large flange portion of an inner ring in a state in which the tapered roller is arranged in the inner ring.

FIG. 20 is a perspective view for illustrating a state of assembling the tapered roller bearing illustrated in FIG. 13 in progress.

FIG. 21 is a perspective view for illustrating a state of assembling the tapered roller bearing illustrated in FIG. 13 in progress.

FIG. 22 is a sectional view of the inner ring assembly illustrated in FIG. 21.

FIG. 23 is a sectional view of the inner ring assembly illustrated in FIG. 21, from which an annular jig is removed.

FIG. 24 is a sectional view for illustrating a state of incorporating the inner ring assembly in the outer ring.

FIG. 25 is a sectional view for illustrating a state in which the inner ring assembly is incorporated in the outer ring.

FIG. 26 is a schematic view for illustrating a rotating state of the tapered roller arranged on a raceway surface of the inner ring.

FIG. 27 is a schematic view for illustrating a relationship between a height of a small flange portion of the inner ring and the tapered roller when the tapered roller arranged on the raceway surface of the inner ring is rotated.

FIG. 28 is a longitudinal sectional view of a tapered roller bearing according to another embodiment of the present invention.

FIG. 29 is a schematic perspective view of a related-art segment.

FIG. 30 is a schematic sectional view of dies for molding the segment illustrated in FIG. 29.

Description of Embodiments

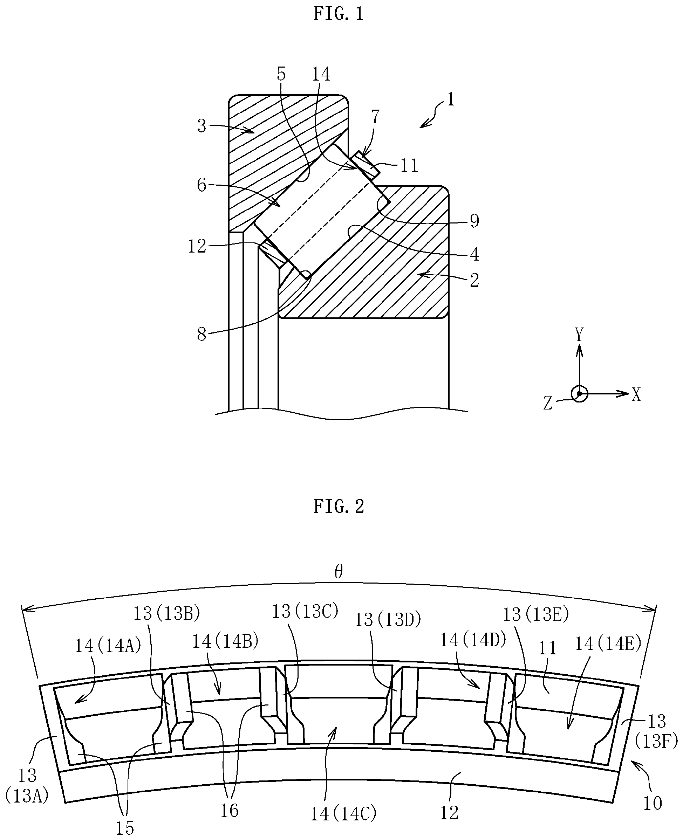

Now, description is made of embodiments of the present invention with reference to the drawings. Noted that, the terms "axial direction", "radial direction", and "circumferential direction" used for indicating directions in the following description are an axial direction, a radial direction, and a circumferential direction of the bearing. In FIG. 1 and other drawings, the "axial direction", the "radial direction", and the "circumferential direction" are indicated by the arrows X, Y, and Z, respectively.

FIG. 1 shows a schematic longitudinal sectional view of a roller bearing according to an embodiment of the first invention. A roller bearing 1 illustrated in FIG. 1 comprises: an inner ring 2 and an outer ring 3; a plurality of tapered rollers 6 disposed in a freely rolling manner between an inner raceway surface 4 formed on an outer peripheral surface of the inner ring 2 and an outer raceway surface 5 formed on an inner peripheral surface of the outer ring 3; and a cage 7 configured to hold the plurality of tapered rollers 6 spaced apart in a circumferential direction. Thus, the roller bearing 1 illustrated in FIG. 1 is a tapered roller bearing. The inner ring 2 comprises, on both sides in an axial direction across the inner raceway surface 4, a small flange portion 8 and a large flange portion 9 with which a small end surface and a large end surface of the tapered roller 6 are respectively in contact. The tapered roller bearing 1 is, for example, a large-sized bearing used for supporting a main shaft of a wind power generator in a freely rotatable manner, and an average diameter of the tapered roller 6 is set to be 40 mm or more, and a bearing outer diameter (outer diameter of the outer ring 3) is set to be 1 m or more.

The cage 7 is a so-called segment cage that is formed of a plurality of segments 10 having an arc shape (fan-like shape) arranged (in a row) in a circular shape (see FIG. 2). The segment 10 integrally comprises a pair of arcuate portions 11 and 12 arranged spaced apart in an axial direction, and a plurality of pillar portions 13 arranged spaced apart in a circumferential direction, interposed between the arcuate portions 11 and 12 along a radial direction, and configured to couple the arcuate portions 11 and 12, and thus a space surrounded by the arcuate portions 11 and 12 and two adjacent pillar portions 13 defines a pocket 14 that houses the tapered roller 6. One arcuate portion 11 forms a large-diameter arcuate portion having a curvature radius larger than that of another arcuate portion 12, and another arcuate portion 12 forms a small-diameter arcuate portion having a curvature radius smaller than that of one arcuate portion 11.

A circumferential angle θ corresponding to a circumferential dimension of the segment 10 is 5° or more and 30° or less. The segment 10 of the illustrated example has a circumferential angle θ of 24°, and includes six pillar portions 13 in total and five pockets 14 in total. In the following, when description is made with a distinction of the six pillar portions 13 in total, the pillar portions 13 arranged from the left side to the right side on the drawing sheet of FIG. 2 are respectively referred to as a first pillar portion 13A to a sixth pillar portion 13F. Further, when description is made with a distinction of the five pockets 14 in total, the pockets 14 arranged from the left side to the right side on the drawing sheet of FIG. 2 are respectively referred to as a first pocket 14A to a fifth pocket 14E.

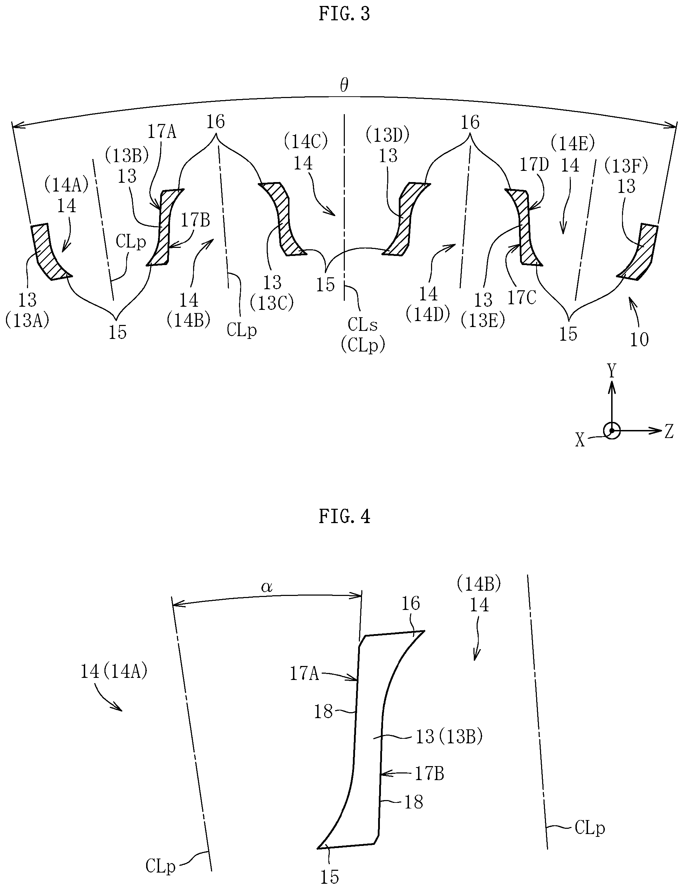

As illustrated in FIG. 3 that is a sectional view of FIG. 2 taken along a direction orthogonal to the axial direction, at end portions of the first pillar portion 13A and the second pillar portion 13B on a radially inner side located on both sides of the first pocket 14A in a circumferential direction, claw portions (radially inner side claw portions) 15 are provided, which protrude toward the first pocket 14A side and can come into contact, in a radial direction, with the tapered roller 6 housed in the first pocket 14A. Further, also at end portions of the third pillar portion 13C and the fourth pillar portion 13D on a radially inner side located on both sides of the third pocket 14C in a circumferential direction, and at end portions of the fifth pillar portion 13E and the sixth pillar portion 13F on a radially inner side located on both sides of the fifth pocket 14E in a circumferential direction, radially inner side claw portions 15 as described above are provided. When such radially inner side claw portions 15 are provided, the tapered rollers 6 are respectively inserted into the first pocket 14A, the third pocket 14C, and the fifth pocket 14E from the radially outer side of the segment 10, and movement of the tapered rollers 6 housed in the pockets 14A, 14C, and 14E toward the radially inner side is restricted.

At end portions of the second pillar portion 13B and the third pillar portion 13C on a radially outer side located on both sides of the second pocket 14B in a circumferential direction, claw portion (radially outer side claw portions) 16 are provided, which protrude toward the second pocket 14B side and can come into contact, in a radial direction, with the tapered roller 6 housed in the second pocket 14B. Further, also at end portions the fourth pillar portion 13D and the fifth pillar portion 13E on a radially outer side located on both sides of the fourth pocket 14D in a circumferential direction, radially outer side claw portions 16 as described above are provided. When such radially outer side claw portions 16 are provided, the tapered rollers 6 are respectively inserted into the second pocket 14B and the fourth pocket 14D from the radially inner side of the segment 10, and movement (falling-off) of the tapered rollers 6 housed in the pockets 14B and 14D toward the radially outer side is restricted.

As described above, a guide type of the cage 7 in the present embodiment that is formed of the segments 10 arranged in a circular shape is a roller (rolling element) guide.

The segment 10 is an injection molded product of a resin material, and an entire surface of the segment 10 is a die surface that is molded by molding dies. The resin material that comprises, as a main raw material, polyether ether ketone (PEEK), for example, blended with a carbon fiber (CF) or a glass fiber (FGF) as a filler for reinforcement, is used. A blending ratio of the filler is 20% or more and 40% or less in a mass ratio with respect to an entire resin material. Accordingly, damage or deformation of the segment 10 caused by collision of the segments 10 during operation or the like of the roller bearing (tapered roller bearing) 1, or deformation of the segment 10 caused by thrusting of the segments 10 in a circumferential direction can be prevented.

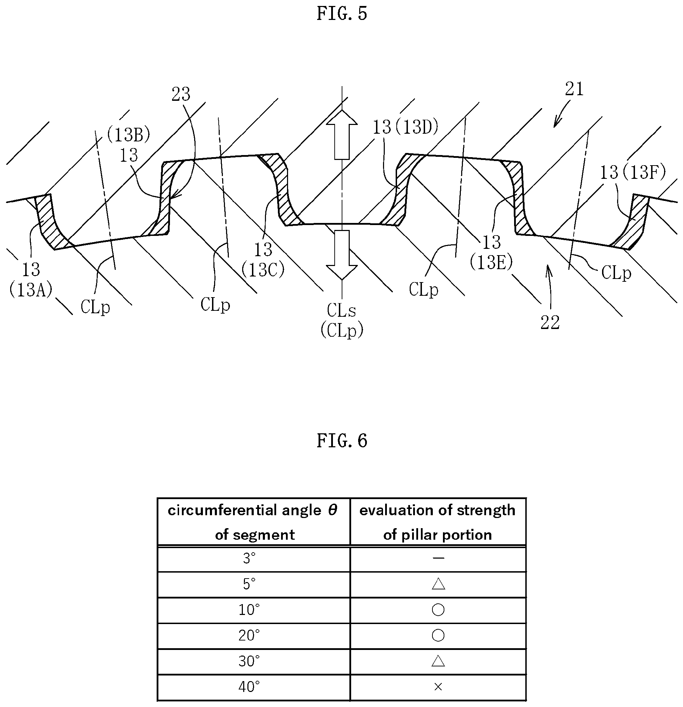

As illustrated in FIG. 5, injection molding of the segment 10 is performed by using a set of molding dies (radially outer side die 21 and radially inner side die 22) that move closer to and away from each other along a segment center line CLs extending in a radial direction passing through a circumferential center portion of the segment 10, similar to the related-art segment 100 described with reference to FIG. 29 and FIG. 30. That is, a cavity 23 corresponding to a shape of the segment 10 to be molded is formed between the dies 21 and 22, and then the segment 10 is molded by cooling and solidifying the resin material which is in a melting state and filled in the cavity 23. The segment 10 that has been molded is extracted from the dies 21 and 22 as the dies 21 and 22 are opened.

The pillar portions 13 (13A to 13F) forming the segment 10 are arranged along a radial direction, and the segment is injection molded by using the molding dies 21 and 22 that move closer to and away from each other in the above aspect. Thus, when no measure is taken, an undercut portion which may cause forcible extraction in extraction of the segment 10 from the dies 21 and 22 may be present on some pillar portions 13. In the segment 10 of the present embodiment, a radially-outer-side partial region of a surface forming the first pocket 14A (pocket surface 17A) in the second pillar portion 13B, a radially-inner-side partial region of a surface forming the second pocket 14B (pocket surface 17B) in the second pillar portion 13B, a radially-inner-side partial region of a surface forming the fourth pocket 14D (pocket surface 17C) in the fifth pillar portion 13E, and a radially-outer-side partial region of a surface forming the fifth pocket 14E (pocket surface 17D) in the fifth pillar portion 13E may be the undercut portions (see FIG. 3).

Here, the regions that may be the undercut portions of the pocket surface described above is provided with a slope 18 corresponding to a so-called draft, in order to prevent the forcible extraction in extraction of the segment 10 from the molding dies 21 and 22.

The second pillar portion 13B illustrated in FIG. 4 in an enlarged manner is described in detail as a representative example. The pocket surface 17A forming the first pocket 14A in the second pillar portion 13B comprises the slope 18, which is inclined by a predetermined angle $\alpha$ with respect to a straight line (pocket center line CLp) extending in a radial direction passing through a circumferential center portion of the first pocket 14A formed by the pocket surface 17A, and is gradually increased in an opening dimension of the first pocket 14A in a circumferential direction toward a radially-outer-side opening of the first pocket 14A. The slope 18 is formed such that a separation distance to the segment center line CLs is gradually reduced toward the radially outer side. Further, The pocket surface 17B forming the second pocket 14B in the second pillar portion 13B comprises the slope 18, which is inclined by a predetermined angle $\alpha$ with respect to the pocket center line CLp of the second pocket 14B formed by the pocket surface 17B, and is gradually increased in an opening dimension of the second pocket 14B in a circumferential direction toward a radially-inner-side opening of the second pocket 14B.

Setting the inclination angle $\alpha$ of the slope 18 larger has an advantage in that the extraction of the segment 10 from the molding die 21 can be smoothly performed. However, there is a disadvantage in that a cross-sectional area (thickness) of the second pillar portion 13B becomes smaller, which may cause a decrease in the strength of the second pillar portion 13B and also the segment 10. Thus, the inclination angle $\alpha$ is set in accordance with the circumferential angle $\theta$ of the segment 10, and an angle formed by the segment center line CLs and the pocket center line CLp. In the first invention in which the maximum value of the circumferential angle $\theta$ of the segment 10 is set to be 30° as described above, the inclination angle $\alpha$ is set to be 15° or less, which is less than half of the maximum setting value, that is 30°, of the circumferential angle $\theta$. Accordingly, an excessive decrease in the strength of the second pillar portion 13B, which is caused by excessive decrease in the cross-sectional area of the second pillar portion 13B, can be prevented.

Here, the circumferential angle $\theta$ of the segment 10 is set to be 5° or more and 30° or less ($5° \leq \theta \leq 30°$) as described above, because the inventor found the following matters as a result of analysis on each of the segments 10 in which the circumferential angle $\theta$ is set to be 3°, 5°, 10°, 20°, 30°and 40° as shown in FIG. 6.

· In a case in which the circumferential angle $\theta$ is set to be 3° that is less than 5°, the segment 10 comprising the pocket 14 which can house the tapered roller 6 having a size of desired load bearing capabilities, cannot be obtained.

. In a case in which the circumferential angle θ is set to be 10° and 20°, when a draft (slope 18) is provided on a predetermined pillar portion 13 to avoid the forcible extraction of the segment 10, a decrease in the strength that may be a problem in use does not occur in the pillar portion 13 on which the slope 18 is provided, and this can be evaluated to be "○" as a strength evaluation;

· In a case in which the circumferential angle θ is set to be 5° and 30°, in comparison with the case in which the circumferential angle θ is set to be 10° and 20°, a decrease in the strength of the pillar portion 13 caused by a draft (slope 18) becomes larger. However , this can be evaluated not to be a problem in use and evaluated as "△".

· In a case in which the circumferential angle θ is 40°, the inclination angle α provided to some pillar portions 13 (particularly, a pillar portion 13 located apart from the segment center line CLs) becomes larger, and a decrease in the strength of the pillar portion 13 is significant, then it is determined that a problem in use may occur, and thus this is evaluated to be "×".

The inclination angle α of the slope 18 provided for the four pocket surfaces 17A to 17D described above may be set to be the same, but the inclination angle α of the slope 18 provided to each of the pocket surfaces 17B and 17C located at positions closer to the segment center line CLs than the slope 18 provided to each of the pocket surfaces 17A and 17D is preferably smaller than the inclination angle α of the slope 18 provided to each of the pocket surfaces 17A and 17D. Accordingly, the thickness reduction amount in each of the second pillar portion 13B and the fifth pillar portion 13E can be kept to minimum necessary, and thus the decrease in the strength of the segment 10 can be suppressed. Thus, in the present embodiment, the inclination angle α of the slope 18 provided to each of the pocket surfaces 17A and 17D is preferably set to be the same, and the inclination angle α of the slope 18 provided to each of the pocket surfaces 17B and 17C is preferably set to be smaller than the inclination angle α of the slope 18 provided to each of the pocket surfaces 17A and 17D. In the present embodiment, the pocket surface other than the above, to which a portion to be an undercut is not provided, is provided with a slight slope 18 (not shown).

As described above, when the circumferential angle θ of the segment 10, which is an injection molded product of a resin material integrally comprising the pair of arcuate portions 11 and 12, the plurality of pillar portions 13, and the claw portions 15 and 16, is set to be 30° or less, even when a so-called draft is provided to (a molding portion of) the pillar portion 13 to avoid the forcible extraction in injection molding of the segment 10 using the set of molding dies 21 and 22 conceptually illustrated in FIG. 5, that is the set of molding dies 21 and 22 that move closer to and away from each other along the segment center line CLs, a decrease in the strength of the segment 10 caused by the reduction in the cross-sectional area of the pillar portion 13 can be controlled in a range in which no problem occurs in use. Accordingly, when the circumferential angle θ of the segment 10 is 30° or less (5° or more and 30° or less), mold-release of the segment 10 can be smoothly performed and the decrease in the strength of the segment 10 can also be controlled in a range in which no problem occurs in use. Thus, the tapered roller bearing 1 according to the present embodiment, in which the cage 7 is formed of the segments 10 arranged in a circular shape, can support a shaft to be supported with high accuracy for a long period of time.

Next, description is made of an embodiment of the second invention with reference to the drawings. The second invention can be employed in the roller bearing 1 illustrated in FIG. 1, that is, the tapered roller bearing comprising: the inner ring 2 and the outer ring 3; the plurality of rollers (tapered roller) 6 arranged between the inner ring and the outer ring; and the cage 7 formed of a segment cage that holds the plurality of tapered rollers 6 spaced apart in a circumferential direction. A guide type of (a segment 10' forming) the cage 7 is, for example, a roller guide type.

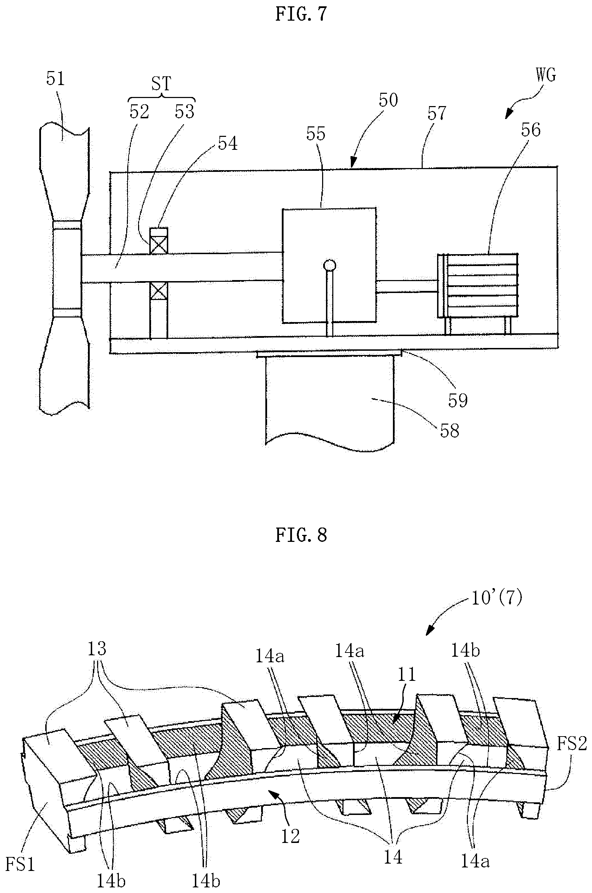

The roller bearing (tapered roller bearing) according to the second invention can be used, for example, as a main-shaft support bearing 53 configured to support a main shaft 52 in a freely rotatable manner, in a main-shaft support structure ST provided inside a nacelle 50 of a wind power generator WG, as conceptually illustrated in FIG. 7. In the following, a main part of the wind power generator WG is briefly described.

The main-shaft support structure ST comprises the main shaft 52 and the main-shaft support bearing 53. The main shaft 52 has a blade 51 fixed at one end thereof to receive wind power, and rotates about a horizontal axis together with the blade 51. The main-shaft support bearing 53 is incorporated in a bearing housing 54 serving as a fixing member. Another end of the main shaft 52 is coupled to a speed increaser 55, and an output shaft of the speed increaser 55 is coupled to a rotation shaft of a generator 56. The main shaft 52, the main-shaft support bearing 53, the bearing housing 54, the speed increaser 55, the generator 56, and the like described above are housed in a casing 57 of the nacelle 50, and the casing 57 (nacelle 50) is supported, in a freely rotatable manner, on a support base 58 (tower) through intermediation of a revolution seat bearing 59.

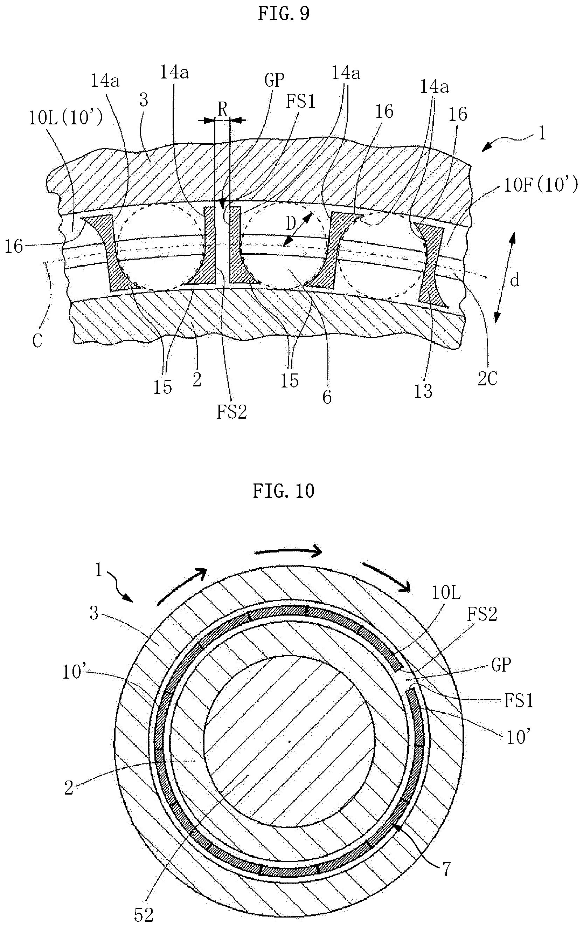

Here, as illustrated in FIG. 9, a relational expression of D>d should be satisfied at least at one location on respective rolling surfaces of the tapered rollers 6, where D represents a roller diameter of the tapered roller 6, d represents a distance between raceway surfaces of the inner ring 2 and the outer ring 3 at a location where the roller diameter D is measured. Accordingly, the main-shaft support structure ST of the wind power generator can be obtained which has a long life and high reliability.

As illustrated in FIG. 8 as an example, the segment 10' according to the embodiment of the second invention integrally comprises: a plurality of pillar portions 13 extending in a radial direction; and a set of arcuate portions (small-diameter-side arcuate portion 12 and large-diameter-side arcuate portion 11) arranged spaced apart in an axial direction and extending in a circumferential direction so as to couple a plurality of pillar portions 13. In the segment 10', a pocket 14 configured to house the tapered roller 6 is formed with the arcuate portions 11 and 12 and two adjacent pillar portions 13. The segment 10' is, for example, made of resin comprising a filler agent.

As illustrated in FIG. 10, the cage 7 is formed of a plurality of segments 10' arranged in a circumferential direction in a circular shape between the inner ring 2 and the outer ring 3. A gap Gp exists at least at one location in a circumferential direction in the cage 7. In FIG. 10, the gap Gp having a circumferential dimension R (see FIG. 9) exists at one location between one segment (also referred as the first segment) 10F and another segment (also referred as the last segment) 10L.

In a case in which the tapered roller bearing 1 illustrated in FIG. 10 and the like is used as the main-shaft support bearing 53 of the wind power generator WG illustrated in FIG. 7, the segment 10' performs, in the example illustrated in FIG. 10, revolution movement in a direction indicated by arrows in FIG. 10 (clockwise direction). In this revolution movement, each segment 10' moves as pushing adjacent segment 10', and in a case in which the gap Gp exists as illustrated in FIG. 10, the segment 10' freely falls at the gap Gp. By this free fall, a circumferential end surface FS1 of one segment 10' among two adjacent segments 10' and a circumferential end surface FS2 of another segment 10' facing the circumferential end surface FS1 collide. By repeating this collision, in the state illustrated in FIG. 10, for example, abrasion may possibly occur at the circumferential end surface FS1 of the first segment 10F and at the circumferential end surface FS2 of the last segment 10L. Thus, a surface roughness of each of the circumferential end surfaces FS1 and FS2 in a radial direction is set to be Ra 6.3 μm or less. Accordingly, abrasion caused by the collision can be decreased. Here, Ra is an arithmetic average roughness. The surface roughness can be uniquely measured in accordance with, for example, a measurement method of JIS standards.

The roller (tapered roller) 6 used for the tapered roller bearing 1 is made of metal in general, which has extremely high hardness as compared to the segment 10' made of resin. Thus, abrasion may occur on a surface defining the pocket 14 that houses the tapered roller 6 in the segment 10', that is, the surfaces of the pocket 14 (14a and 14b) that come into contact with the tapered roller 6, by collision and rotation movement of the tapered roller 6. Thus, among the pocket surfaces, a surface roughness in an axial direction of the pocket surface 14a of the pillar portion 13 and a surface roughness in a radial direction of the pocket surface 14b of the arcuate portions 11 and 12 are all set to be Ra 1.6 μm or less. Accordingly, abrasion caused by contact of the tapered roller 6 and the pocket surfaces 14a and 14b can be decreased. Here, an abrasion control effect obtained by employing a configuration in which a surface roughness at an end surface of the cage (segment 10') is set to be Ra 6.3 μm or less, and a configuration in which the surface roughness of the pocket surface 14 is set to be Ra 1.6 μm or less is shown in the following table (Table 1). The marks "○", "△" and "×" in Table 1 respectively indicates a case of satisfactory abrasion control effect, a case of insufficient abrasion control effect, and a case of no abrasion control effect.

[Table 1]

|  | Ra1.6 | Ra3.2 | Ra6.3 | Ra12.5 | Ra25 |
|---|---|---|---|---|---|
| Cage end surface | ○ | ○ | ○ | △ | × |
| Pocket surface | ○ | △ | × | × | × |

As described above, in the cage (segment cage) 7 of the present embodiment, the gap Gp is provided at one location between one segment (the first segment) 10F and another segment (the last segment)10L. The gap Gp is provided for the purpose of preventing a problem in strength caused by collision of the segments 10', deformation of the segments 10' caused by thrusting each other in a circumferential direction, and the like. A circumferential dimension of the gap Gp is set to be, at room temperature, larger than 0.075% and smaller than 0.12% of a circumference of a circle C having a center at an axis center of the cage 7 and passing through centers of the circumferential end surfaces FS1 and FS2 of the segment 10'. Accordingly, even when the segment 10' has thermally expanded, the gap Gp can be secured.

Temperature of the tapered roller bearing 1 increases by friction in use and the like. In a case in which the segment 10' made of resin is used, the resin generally has a linear expansion coefficient larger than that of steel, and thus when the temperature of the bearing 1 increases, the segment 10' thermally expands greater than the inner ring 2 and/or the outer ring 3. In this case, the gap Gp in a circumferential direction formed between the segments 10' becomes negative, and there is a concern that the segments 10' thrust each other. Thus, for example, by making a forming material of the segment 10' to include a filler agent that decreases a linear expansion coefficient, the linear expansion coefficient of (the forming material of) the segment 10' is set to be $1.3 \times 10^{-5}$/°C or more, and $1.7 \times 10^{-5}$/°C or less. Accordingly, excessive thermal expansion of the segment 10' can be prevented, and thrusting of the segments 10' caused by the gap GP being a negative gap can be avoided.

A base resin (main component) of the resin material used for preparing the segment 10' is preferably polyether ether ketone (PEEK). PEEK has a relatively small linear expansion coefficient, and the linear expansion coefficient can be further decreased by adding a filler agent. As the filler agent described above, it is particularly preferable to use a carbon fiber (CF) or a glass fiber (FGF). These filler agents are fibrous, and thus the linear expansion coefficient can be effectively decreased. A ratio of the filler agent in the resin material is preferably 20% by mass or more and 40% by mass or less, in order to prevent occurrence of trouble by filling and to decrease the linear expansion coefficient.

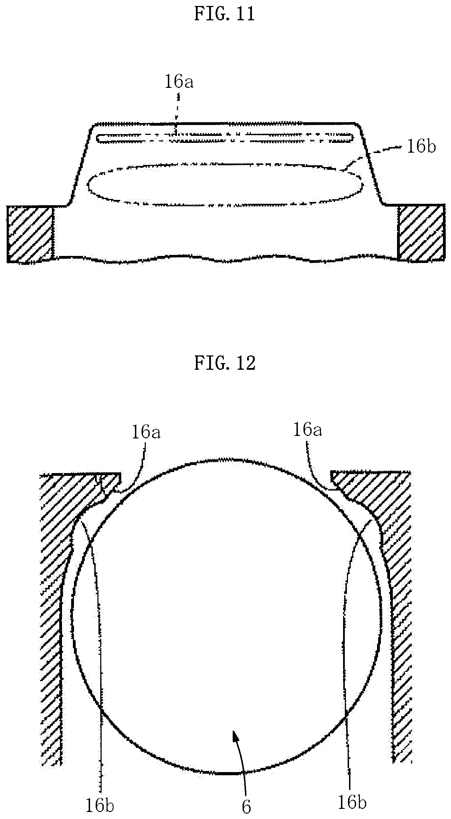

As illustrated in FIG. 9 and the like, the segment 10' comprises claw portions (radially inner side claw portions 15 and radially outer side claw portions 16). As illustrated in FIG. 11 and FIG. 12, recess portions 16b are formed at position on a circumferentially inner side of the contact portions 16a with respect to the tapered roller 6 in the claw portions 16. The recess portion 16b is formed by a shrinkage sink generated in molding the segment 10'. Accordingly, the recess portion 16b can be formed without additional processing.

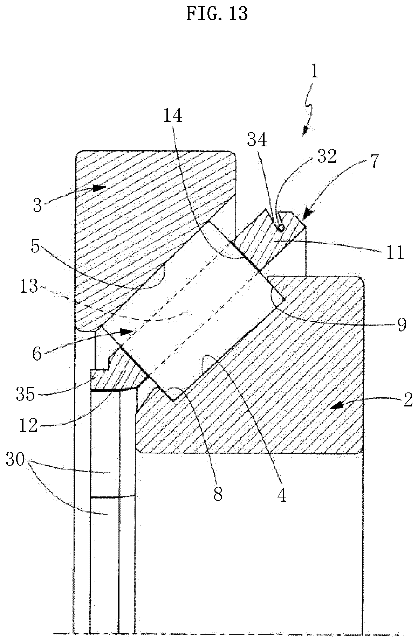

The first invention and the second invention of the present application described above can be employed not only in the above-mentioned tapered roller bearing 1, but also in the tapered roller bearing 1 illustrated in FIG. 13 and the like. The tapered roller bearing 1 illustrated in FIG. 13 has a configuration that is mainly different from the tapered roller bearing 1 illustrated in FIG. 1 in the following points.

(1) A guide type of the cage 7, which is formed of a plurality of segments arranged in a circular shape, is an outer ring guide type.

(2) The tapered roller bearing 1 comprises a coupling member 32 that couples a plurality of segments.

The tapered roller bearing 1 illustrated in FIG. 13 comprises, similar to the tapered roller bearing 1 illustrated in FIG. 1, an inner ring 2, an outer ring 3, a plurality of tapered rollers 6, and a cage (segment cage) 7 formed of a plurality of segments 30, and is, for example, a large-sized bearing used for supporting a main shaft of a wind power generator. That is, an average diameter of the tapered rollers 6 is set to be 40 mm or more, and an outer diameter of the bearing (outer ring 3) is set to be 1 m or more.

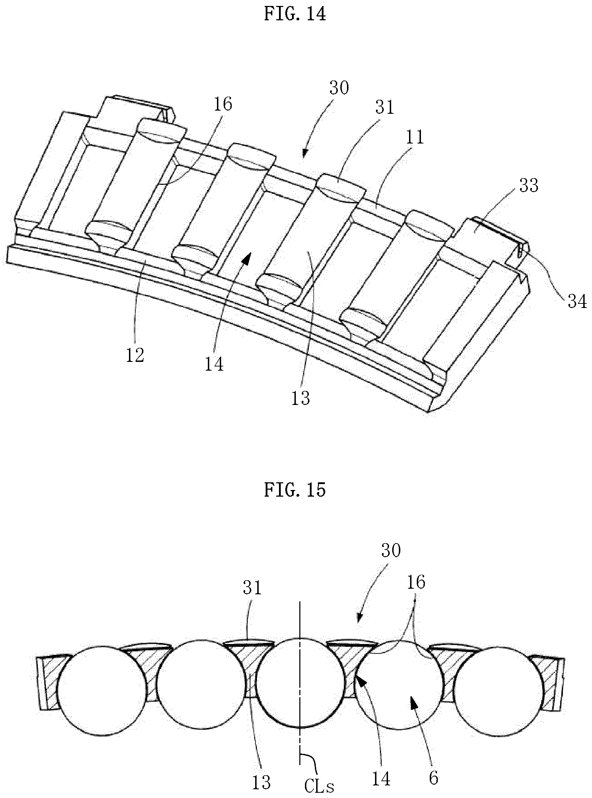

The segment 30 is, similar to the segment 10 illustrated in FIG. 2 and the like, an injection molded product of a resin material (resin material comprising, as a main raw material, polyether ether ketone blended with a glass fiber or a carbon fiber, for example) integrally comprising a pair of arcuate portions 11 and 12 and a plurality of pillar portions 13, and a space surrounded by the arcuate portions 11 and 12 and two adjacent pillar portions 13 defines a pocket 14 that houses the tapered roller 6 (FIG. 14 and FIG. 15). A guide type of the cage 7 of the present embodiment is the outer ring guide as described above, and thus, only the radially outer side claw portions 16 are provided to each of the pillar portion 13, and the radially inner side claw portions 15 (FIG. 2 and the like) are not provided. And thus, the tapered roller 6 is inserted into the pocket 14 via the radially inner side opening of the pocket 14 from a radially inner side of the segment 30, and the movement of the tapered roller 6 housed in the pocket 14 toward the radially outer side is restricted by the radially outer side claw portions 16.

Although detailed description is omitted, in the segment 30, similar to the segment 10 illustrated in FIG. 2 and the like, the circumferential angle θ is set to be 5° or more and 30° or less, and the pocket surface of the pillar portion 13 comprises the slope 18 inclined with respect to a pocket center line CLp of the pocket 14 formed by the pocket surface. An inclination angle of this slope is 15° or less. Thus, also for the segment 30, the forcible extraction from the molding dies 21 and 22 (see FIG. 5) is avoided, and also a decrease in the mechanical strength of the pillar portion 13 is suppressed.

As illustrated in FIG. 14 and FIG. 15, guide protrusions 31, each formed of a protruding portion having an arc shape in cross-section, are provided on outer surfaces at both ends in an axial direction of the pillar portion 13 of the segment 30. The guide protrusion 31 may be provided to all the pillar portions 13 as an example in the drawing, or may only be provided to some of the pillar portions 13. When the tapered roller bearing 1 drives (when the main shaft having the inner ring 2 fitted thereto rotates), the cage 7 moves (rotates) in a circumferential direction in a state in which the guide protrusions 31 of the segment 30 are in contact with the raceway surface 5 of the outer ring 3.

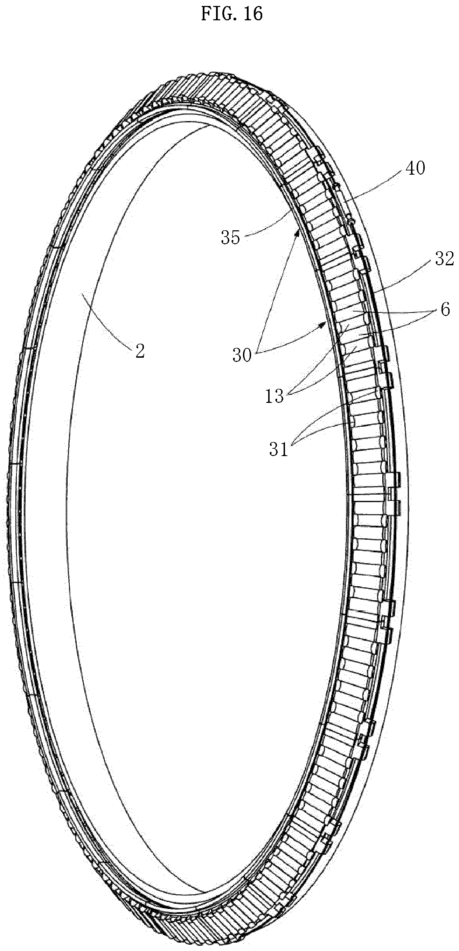

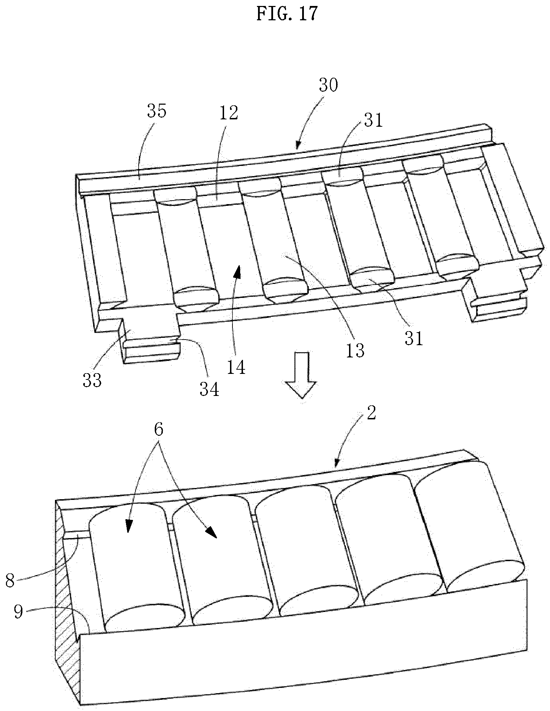

As illustrated in FIG. 14 and FIG. 17 and the like, at both circumferential end portions of the large-diameter arcuate portion 11 of the segment 30, there are provided engagement portions 34 to which a coupling member 32 having an annular shape arranged on a large-diameter side of the segment 30 (cage 7) (see FIG. 16 and the like) engages so as to be freely attachable and detachable. The engagement portions 34 are formed in projecting portions 33 provided on an axially outer side of the large-diameter arcuate portion 11 in a projecting manner. In order to prevent interference between the projecting portions 33 provided to two segments 30 adjacent to each other in a circumferential direction, the projecting portions 33 are provided somewhat on a circumferentially inner side (side closer to the segment center line CLs) from the circumferential end portions of the segment 30.

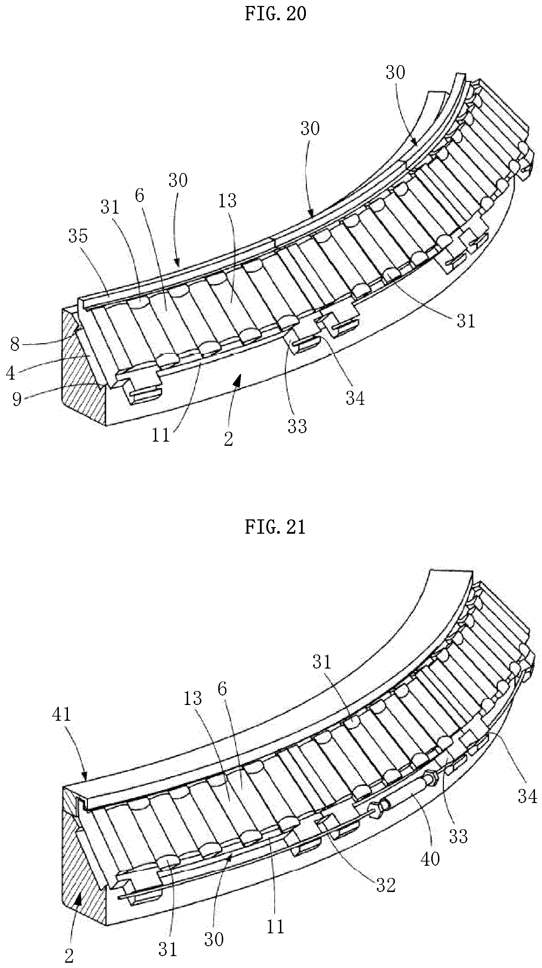

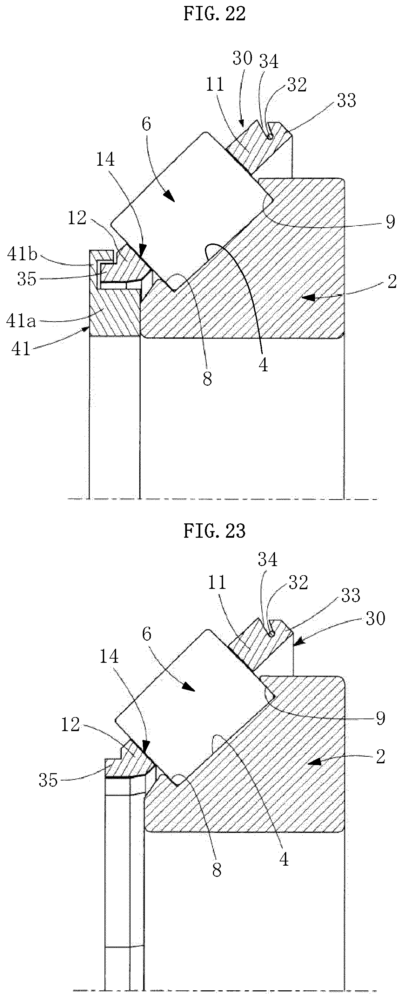

As illustrated in FIG. 13 and FIG. 17 and the like, an attachment portion 35 for an annular jig 41 (see FIG. 21 and FIG. 22) arranged on a small-diameter side of the segment 30 (cage 7) is provided to the small-diameter arcuate portion 12 of the segment 30. The attachment portion 35 is provided over an entire length of the small-diameter arcuate portion 12. As illustrated in FIG. 22, the annular jig 41 is formed of a ring portion 41a that abuts against a small end surface of the inner ring 2, and an engagement portion 41b having an L-shape in cross-section provided so as to project from an outer periphery of an end portion of the ring portion 41a toward a radially outer side. The annular jig 41 is attached to the segment 30 (cage 7) by fitting the attachment portion 35 of the segment 30 into (a circumferential groove formed by) the engagement portion 41b, in a state in which the ring portion 41a is abutting against the small end surface of the inner ring 2.

A linear member such as a wire is used for the coupling member 32 arranged on the large-diameter side of the segment 30, and here, the segments 30 are formed in a circular shape by binding end portions of the linear member, as the coupling member 32, in a longitudinal direction together, using a fastening member 40 (see FIG. 16 and FIG. 21). A turnbuckle, a hook, or the like can be used as the fastening member 40, and here, the turnbuckle is used. The turnbuckle is advantageous in that coupling and decoupling the end portions of the linear member can easily be performed, tightening force does not loosen, tightening force (tension) can be easily adjusted, and the like. The fastening member 40 is arranged to be housed between two projecting portions 33 that are adjacent to each other in a circumferential direction.

In forming the coupling member 32 having an annular shape, it is not always required that the fastening member 40 such as the turnbuckle be used, and the end portions of the linear member may be directly coupled together.

The coupling member 32 having an annular shape may be formed by using a band-like member such as a belt, other than the linear member such as a wire. In addition, the coupling member 32 may be formed by using a single linear member or a single band-like member, or may be formed by using a plurality of linear members or a plurality of band-like members. In the case of using a plurality of linear members or a plurality of band-like members, it is preferred that linear members or band-like members having the same length be used.

The tapered roller bearing 1 illustrated in FIG. 13 having the configuration described above can be assembled such that the inner ring 2, the tapered rollers 6, and the cage 7 are integrally assembled to form an inner ring assembly, and the inner ring assembly is incorporated to the outer ring 3.

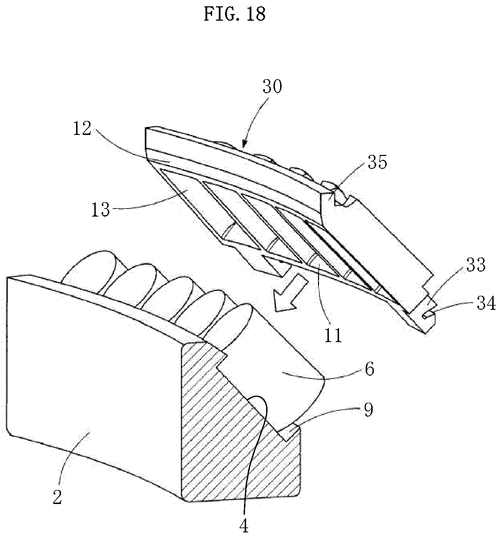

As illustrated in FIG. 17 and FIG. 18, in assembling the inner ring assembly, the tapered rollers 6 are first arranged in one line on the raceway surface 4 on the inner ring 2, in a state in which a large end surface of the inner ring 2 is facing down. At this time, the tapered roller 6 may fall-off from the inner ring 2 (raceway surface 4) by the own weight of the tapered roller 6. In order to prevent the falling-off, a distance from a center axis of the inner ring 2 to a distal end of the large flange portion 9 is set to be larger than a distance from the center axis of the inner ring 2 to the center of gravity of the tapered roller 6. An outer diameter J of the large flange portion 9 satisfies the following expression.

$$(J/2)-H \cdot \cos I > y1$$

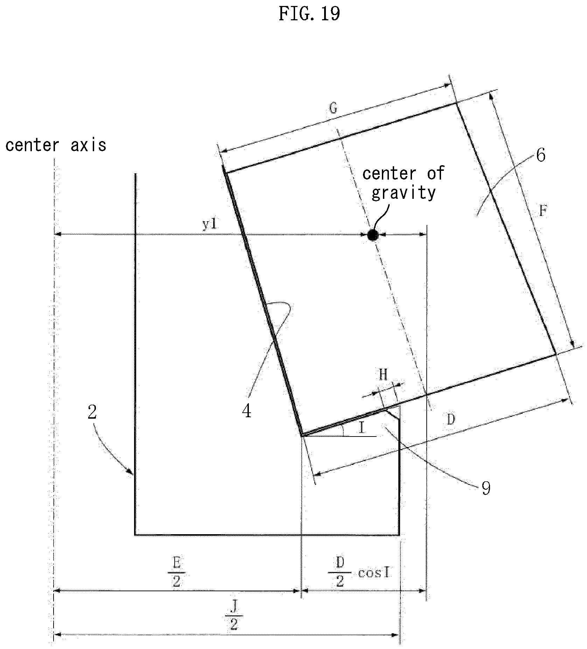

That is, as illustrated in FIG. 19, when the relational expression described above is satisfied, the falling-off of the tapered roller 6 from the raceway surface 4 of the inner ring 2 can be prevented, where, in a state in which the large end surface of the inner ring 2 is facing down and the tapered roller 6 is arranged on the raceway surface 4 of the inner ring 2, I is an angle between a side surface in contact with tapered roller 6 of the large flange portion 9 of the inner ring 2 and a straight line orthogonal to a center axis of the inner ring 2, H is a width of a chamfer at the distal end of the large flange portion 9, y1 is distance from the center axis of the inner ring 2 to the center of gravity of the tapered roller 6, J is an outer diameter of the large flange portion 9. Symbols D, G, F, and E shown in FIG. 19 respectively represent a diameter of a large end surface of the tapered roller 6, a diameter of a small end surface of the tapered roller 6, a length of the tapered roller 6, a distance from the center axis of the inner ring 2 to an end portion of the raceway surface 4 on the large flange portion 9 side.

As illustrated in FIG. 17, FIG. 18, and FIG. 20, the tapered rollers 6 are arranged on the raceway surface 4 of the inner ring 2, and subsequently the segment 30 is covered from the radially outer side, and thus the tapered roller 6 is inserted into the pocket 14 via the radially inner side opening of the pocket 14 provided to the segment 30. As illustrated in FIG. 21, a plurality of segments 30 are arranged in a circular shape, and subsequently the annular jig 41 is attached to the attachment portion 35 provided to the small-diameter arcuate portion 12 of each of the segments 30. The annular jig 41 is attached to the attachment portion 35 of the segment 30 by moving in an axial direction, in a state in which the annular jig 41 is arranged coaxially with the inner ring 2. In addition, the linear member is passed to the engagement portion 34 of the large-diameter arcuate portion 11 such that the linear member is arranged (rolled up) as the coupling member 32 on an outer periphery of each of the segments 30 on a large-diameter side, and then both end portions of the linear member are bound (coupled) together by using the fastening member 40. Accordingly, a plurality of segments 30 arranged in one line in a circular shape are integrated, and the inner ring assembly is obtained in which the inner ring 2, the tapered roller 6 and the cage 7 are integrally assembled.

When both end portions of the linear member rolled up to the outer periphery of the segment 30 are coupled together by the fastening member 40, a small-diameter side of the segment 30 arranged in a circular shape tends to open. However, the coupling work for both end portions of the linear member is performed in a state in which the annular jig 41 is attached to the attachment portion 35 provided to the small-diameter arcuate portion 12 of the segment 30, and thus opening at the small-diameter side of the segment 30 in the coupling work is suppressed, and the coupling work can be efficiently performed.

The annular jig 41 is removed from the inner ring assembly (the attachment portion 35 of the segment 30), after assembly of the inner ring assembly is completed (see FIG. 23). The annular jig 41 is removed from the inner ring assembly, by moving the annular jig 41 along an axial direction.

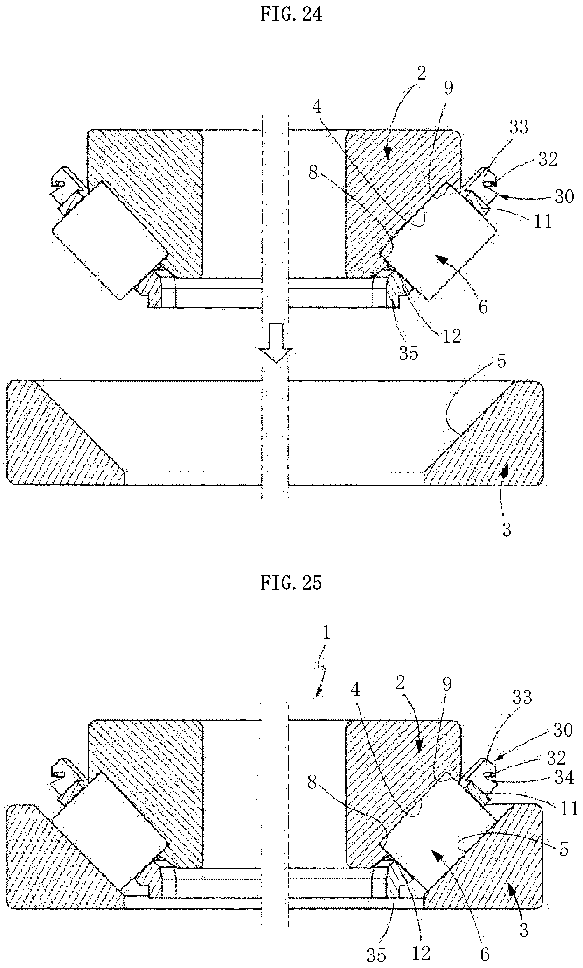

As illustrated in FIG. 24 and FIG. 25, the inner ring assembly (the inner ring assembly from which the annular jig 41 is removed) obtained as described above, is incorporated to the outer ring 3, in an inversion state in which the small-diameter side of the inner ring assembly is facing down. When the inner ring assembly is incorporated to the outer ring 3 in such a state, the plurality of segments 30 arranged in a circular shape are coupled by the coupling member 32, and thus the segments 30 are not disarrayed. Further, the tapered roller 6 housed in the pocket 14 of each of the segments 30 comes into contact and engages with the claw portions (radially outer side claw portions 16) provided to the pillar portion 13 forming the pocket 14 in a vertical direction, and thus, the falling-off from the pocket 14 is restricted.

In addition, when the inner ring assembly is set to the inversion state with its small-diameter side facing down, in a state in which the annular jig 41 is removed, each of the segments 30 coupled by the coupling member 32 is configured such that the tapered roller 6 housed in the pocket 14 fits in between the flange portions 8 and 9 located at both sides of the inner raceway surface 4 of the inner ring 2 and the tapered roller 6 is caught by the small flange portion 8 of the inner ring 2. Accordingly, the falling-off of each of the segments 30 from the inner ring assembly is prevented. In order to prevent the falling-off of the segment 30, a height of the small flange portion 8 (diameter M) of the inner ring 2 is set to satisfy the following relational expression.

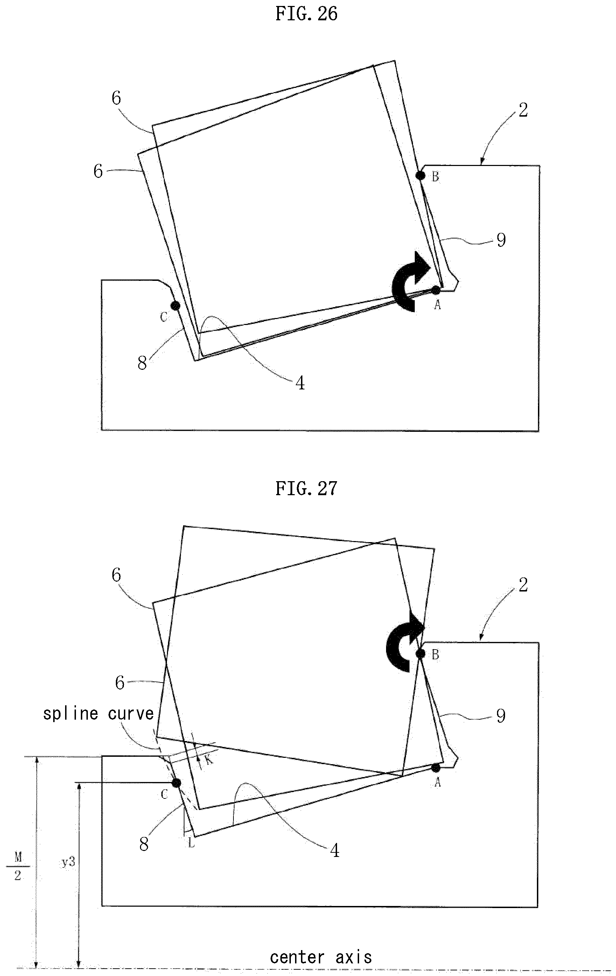

As schematically illustrated in FIG. 26, it is assumed that, in a case in which the tapered roller 6 fitting in between the small flange portion 8 and the large flange portion 9 of the inner ring 2 rotates, when a large end surface of the tapered roller 6 is not in contact with the large flange portion 9, the tapered roller 6 rotates about a point A, and when the large end surface of the tapered roller 6 is in contact with the large flange portion 9, the tapered roller 6 rotates about a point B.

As schematically illustrated in FIG. 27, in a case in which the tapered roller 6 rotates about the point B with the large end surface of the tapered roller 6 being in contact with the large flange portion 9, when a diameter of the small flange portion 8 of the inner ring 2 is sufficiently large, even when the tapered roller 6 tends to drop out from between the small flange portion 8 and the large flange portion 9, a small end surface of the tapered roller 6 comes into contact with a point C of the small flange portion 8, and thus rotation of the tapered roller 6 is prevented, and the tapered roller 6 is caught by the small flange portion 8 of the inner ring 2. As illustrated in FIG. 27, the point C of the small flange portion 8, to which the tapered roller 6 is caught, is an intersection of the small flange portion 8 and a curve (spline curve) of a trajectory of a small end surface corner portion of the tapered roller 6 which is drawn a case of the tapered roller 6 rotating. At this time, following relational expression is satisfied, where M is a diameter of the small flange portion 8, L is an angle between the side surface of the small flange portion 8 on point C side and the axial direction (center axis of the inner ring 2), K is a width of the chamfer at the distal end of the small flange portion 8, y3 is the distance from the point C, at which the small end surface of the tapered roller 6 and the small flange portion 8 come into contact, to the center axis of the inner ring 2, when the tapered roller 6 rotates about the point B on the distal end portion of the large flange portion 9.

$$(M/2)-K\cdot\cos L>y3$$

In this way, the tapered roller bearing 1 is assembled by incorporating the inner ring assembly to the outer ring 3 (see FIG. 25).

As illustrated in FIG. 25, the coupling member 32 coupling the plurality of segments 30 can be removed after assembly of the tapered roller bearing 1 is completed. Even when the coupling member 32 is removed, each of the segments 30 is already arranged between the inner ring 2 and the outer ring 3, and thus the segments 30 are not disarrayed (the cage 7 is not disassembled).

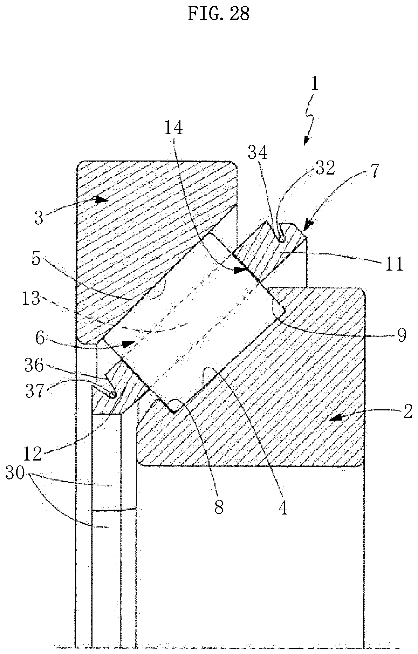

The tapered roller bearing 1 according to another embodiment described above is configured such that the attachment portion 35 of the annular jig 41 is provided to the small-diameter arcuate portion 12 of the segment 30. However, as illustrated in FIG. 28, an engagement portion 36 similar to the engagement portion 34 of the coupling member 32 provided to the large-diameter arcuate portion 11 may be provided to the small-diameter arcuate portion 12, and a coupling member 37 similar to the coupling member 32 having an annular shape that is engaged to the engagement portion 34 may be engaged to the engagement portion 36 in a detachable manner.

The tapered roller bearing 1 according to the embodiment of the first invention and the second invention of the present application has been described above. However, the embodiment of the first invention and the second invention is not limited thereto, and various changes can appropriately be made without departing from the gist of the first invention and the second invention. The first invention and the second invention may also be applied to, for example, a roller bearing (cylindrical roller bearing) that uses a roller other than the tapered roller 6, for example, a cylindrical roller as the roller.

Reference Signs List

| | |
|---|---|
| 1 | roller bearing (tapered roller bearing) |
| 2 | inner ring |
| 3 | outer ring |
| 6 | tapered roller |
| 7 | cage |
| 8 | small flange portion |
| 9 | large flange portion |
| 10 | segment |
| 10' | segment |
| 11 | arcuate portion (large-diameter arcuate portion) |
| 12 | arcuate portion (small-diameter arcuate portion) |
| 13 | pillar portion |
| 14 | pocket |
| 17A | pocket surface |
| 21 | molding die |
| 22 | molding die |
| 23 | cavity |
| 30 | segment |
| 32 | coupling member |
| 33 | projecting portion |
| 34 | engagement portion |
| 35 | attachment portion |
| 41 | annular jig |
| CLp | pocket center line |
| CLs | segment center line |
| ST | main-shaft support structure |

**Claims**

**1.** A roller bearing, comprising:

an inner ring and an outer ring;
a plurality of rollers interposed between raceway surfaces of the inner ring and the outer ring; and
a cage having an annular shape configured to hold the plurality of rollers spaced apart in a circumferential direction,
wherein the cage is formed of a plurality of segments arranged in a circumferential direction,
wherein the segments are each an injection molded product of a resin material integrally comprising:

a plurality of pillar portions arranged spaced apart in a circumferential direction;
a pair of arcuate portions arranged spaced apart in an axial direction and coupled to each other through intermediation of the plurality of pillar portions;
claw portions, which are provided to the pillar portions, and are configured to be in contact with the rollers housed in pockets each formed by two pillar portions that are adjacent to each other and the pair of arcuate portions to restrict motion of the rollers in a radial direction, and

wherein a circumferential angle $\theta$, which corresponds to a circumferential length, of each of the segments is set to be 5° or more and 30° or less.

**2.** The roller bearing according to claim 1, wherein a pocket surface of the pillar portion forming the pocket comprises a slope inclined with respect to a pocket center line extending in a radial direction passing through a circumferential center portion of the pocket formed by the pocket surface, and an inclination angle $\alpha$ of the slope is 15° or less.

**3.** The roller bearing according to claim 1, wherein the resin material comprises, as a main raw material, polyether ether ketone blended with a carbon fiber or a glass fiber.

4. The roller bearing according to claim 1, further comprising a coupling member having an annular shape configured to couple the plurality of segments in a circular shape,
wherein the segment is provided with an engagement portion configured to be engaged with the coupling member so as to be freely attachable and detachable, and the engagement portion is provided at both circumferential end portions of either one of the pair of arcuate portions.

5. The roller bearing according to claim 4,

wherein the roller is a tapered roller, one of the pair of arcuate portions is a large-diameter arcuate portion, another one of the pair of arcuate portions is a small-diameter arcuate portion having a curvature radius smaller than that of the large-diameter arcuate portion, and
wherein the large-diameter arcuate portion is integrally provided with a projecting portion comprising the engagement portion.

6. The roller bearing according to claim 5 wherein the small-diameter arcuate portion is provided with an attachment portion for an annular jig configured to hold the plurality of segments in a circular shape form.

7. The roller bearing according to claim 1, wherein the roller bearing is to be used for supporting a main shaft of a wind power generator, and the outer ring has an outer diameter of 1 m or more.

8. A roller bearing, comprising:

an inner ring and an outer ring;
a plurality of rollers arranged between the outer ring and the inner ring; and
a plurality of segments, which comprise pockets configured to house the rollers, and are arranged sequentially in a circumferential direction between the outer ring and the inner ring to form a cage,
wherein the segments have a surface roughness of 6.3 $\mu$m or less on two end surfaces of adjacent segments opposed to each other in a circumferential direction, and have a surface roughness of Ra 1.6 $\mu$m or less on an inner side of the pocket.

9. The roller bearing according to claim 8, wherein the segment has a linear expansion coefficient of $1.3 \times 10^{-5}$/°C or more and $1.7 \times 10^{-5}$/°C or less.

10. The roller bearing according to claim 8 or claim 9,

wherein the cage comprises a gap between adjacent segments at least at one location, and
wherein a circumferential dimension of the gap at room temperature is larger than 0.075% and smaller than 0.12% of a circumference of a circle having a center at an axis of the cage and passing through centers of circumferential end surfaces of the segments.

11. The roller bearing according to claim 10,

wherein the segment is made of a resin comprising a filler agent, and
wherein the filler agent comprises at least any one of a carbon fiber or a glass fiber.

12. The roller bearing according to claim 11, wherein the resin is polyether ether ketone.

13. The roller bearing according to claim 11, wherein a filling ratio of the filler agent in the resin is 20% by mass or more and 40% by mass or less.

14. The roller bearing according to claim 8 or claim 9,

wherein the segment comprises a guide claw,
wherein a recess portion is formed at a position on a circumferentially inner side of a contact portion on the guide claw, and
wherein the recess portion is formed by a shrinkage sink generated in molding the segment.

15. The roller bearing according to claim 8 or claim 9, wherein the segment is of a roller guide.

16. The roller bearing according to claim 8 or claim 9, wherein the segment is of an outer ring guide.

17. The roller bearing according to claim 8 or claim 9, wherein the cage is configured such that, a guide claw is provided on a radially outer side of adjacent pillar portions of each pocket to allow insertion of the roller into the pocket from a radially inner side of the segment, a coupling member is arranged in an annular shape on a large-diameter-side side surface of each segment, and an engagement portion that engages the coupling member so as to be freely attachable and detachable is provided to each segment so that the segments are coupled.

18. A main-shaft support structure for a wind power generator, comprising:

   a main shaft configured to rotate with a blade receiving wind power; and
   the roller bearing according to claim 8 or claim 9 configured to support the main shaft in a freely rotatable manner.

19. The main-shaft support structure for a wind power generator according to claim 8, wherein a relationship of D>d is satisfied at least at one location on a rolling surface of each of the plurality of rollers, where D is a roller diameter, d is a distance between raceway surfaces of the inner ring and the outer ring at a measurement position for the roller diameter.

FIG. 1

FIG. 2

FIG. 3

FIG. 4

## FIG. 5

## FIG. 6

| circumferential angle $\theta$ of segment | evaluation of strength of pillar portion |
|---|---|
| 3° | — |
| 5° | △ |
| 10° | ○ |
| 20° | ○ |
| 30° | △ |
| 40° | × |

FIG. 7

FIG. 8

## FIG. 9

## FIG. 10

FIG. 11

FIG. 12

FIG. 13

FIG. 14

FIG. 15

FIG. 16

FIG. 17

FIG. 18

FIG. 19

FIG. 20

FIG. 21

## FIG. 22

## FIG. 23

FIG. 24

FIG. 25

## FIG. 26

## FIG. 27

FIG. 28

FIG. 29

radial direction

axial direction

circumferential
direction

FIG. 30

CLs

## INTERNATIONAL SEARCH REPORT

| International application No. |
| --- |
| **PCT/JP2023/038964** |

**A.    CLASSIFICATION OF SUBJECT MATTER**

*F16C 33/51*(2006.01)i; *F03D 1/06*(2006.01)i; *F03D 80/70*(2016.01)i; *F16C 19/36*(2006.01)i; *F16C 33/56*(2006.01)i
FI:    F16C33/51; F03D1/06 Z; F03D80/70; F16C19/36; F16C33/56

According to International Patent Classification (IPC) or to both national classification and IPC

**B.    FIELDS SEARCHED**

Minimum documentation searched (classification system followed by classification symbols)

F16C33/51; F03D1/06; F03D80/70; F16C19/36; F16C33/56

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2014-139474 A (NSK LTD.) 31 July 2014 (2014-07-31) | 1 |
| | paragraphs [0002], [0012]-[0024], fig. 1-7 | |
| Y | | 3-5, 7 |
| A | | 6 |
| Y | JP 2019-158082 A (NTN CORP.) 19 September 2019 (2019-09-19) | 3 |
| | paragraph [0011] | |
| A | | 6 |
| Y | JP 2008-298272 A (NTN CORP.) 11 December 2008 (2008-12-11) | 1-5, 7 |
| | paragraphs [0038]-[0044], fig. 2-4 | |
| A | | 6 |
| Y | JP 2018-80747 A (NTN CORP.) 24 May 2018 (2018-05-24) | 1-5, 7 |
| | paragraphs [0019]-[0037], fig. 1-11 | |
| A | | 6 |

☑ Further documents are listed in the continuation of Box C.      ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **05 January 2024** | **16 January 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

34

## INTERNATIONAL SEARCH REPORT

| International application No. |
| --- |
| **PCT/JP2023/038964** |

### C.    DOCUMENTS CONSIDERED TO BE RELEVANT

| Category* | Citation of document, with indication, where appropriate, of the relevant passages | Relevant to claim No. |
| --- | --- | --- |
| Y | JP 2009-52746 A (NTN CORP.) 12 March 2009 (2009-03-12)<br>    paragraphs [0027]-[0045], fig. 1-2 | 1-5, 7 |
| A | | 6 |
| P, X | JP 2022-179448 A (NTN CORP.) 02 December 2022 (2022-12-02)<br>    paragraphs [0038]-[0085], fig. 1-21 | 1, 3-7 |
| A | JP 2011-137530 A (NTN CORP.) 14 July 2011 (2011-07-14)<br>    entire text, all drawings | 1-7 |

Form PCT/ISA/210 (second sheet) (January 2015)

## INTERNATIONAL SEARCH REPORT

| International application No. |
| --- |
| **PCT/JP2023/038964** |

**Box No. III  Observations where unity of invention is lacking (Continuation of item 3 of first sheet)**

This International Searching Authority found multiple inventions in this international application, as follows:

The claims are classified into the two inventions below.
(Invention 1) Claims 1-7

Document 1 (in particular, see paragraphs [0012]-[0024] and fig. 1-7) describes "an invention relating to a rolling bearing comprising: inner ring and outer ring; multiple rollers (conic rollers 7) provided between the race surfaces of the inner and outer rings; and an annular cage (cage 20) for caging the multiple rollers spaced in the circumferential direction, wherein the cage is formed by arranging multiple segments (cage segments 21) in the circumferential direction, and each segment is an injection molded article (see paragraph [0023]) made of a resin material and integrally including: multiple pillar parts (pillar parts 1) arranged spaced in the circumferential direction; a pair of arc-shaped parts (side plates 2) arranged spaced in the axial direction and connected by the multiple pillar parts; and claw parts (projections 5, guides 6) provided in the pillar parts to come in contact with a roller accommodated in a pocket formed by adjacent two of the pillar parts and the pair of arc-shaped parts and restrict the movement of the roller in the radial direction, wherein the angle of circumference θ corresponding to the circumferential length of the segment is 5-30 degrees inclusive (considering that paragraph [0012] indicates 18 cage segments, the angle of circumference θ is 20 degrees). In light of document 1, claim 1 lacks novelty, and thus does not have a special technical feature. However, claim 2 that depends from claim 1 has the special technical feature wherein "pocket surfaces forming the pocket among the pillar parts have an inclination relative to a pocket center line passing through a circumferential center part of the pocket formed by the pocket surfaces and extending in the radial direction, and the angle of this inclination α is 15 degrees or less". Accordingly claims 1-2 are classified as invention 1.

Claims 3-7 depend from claim 1 and have an inventive link to claim 1, and thus are classified as invention 1.
(Invention 2) Claims 8-19

Claims 8-19 share, with claim 1 classified as invention 1, the technical feature of "comprising: inner ring and outer ring; multiple rollers arranged between the outer and inner rings; and multiple segments having pockets for accommodating the rollers, and forming a cage by being sequentially arranged contiguous in the circumferential direction between the outer and inner rings". However, this technical feature does not make a contribution over the prior art in light of the disclosure of document 1 (in particular, see paragraphs [0012]-[0024], and fig. 1-7), and thus cannot be considered a special technical feature. Apart from this feature, there are not the same or corresponding special technical features between claims 8-19 and claim 1.

Furthermore, claims 8-19 do not depend from claim 1. In addition, claims 8-19 are not substantially identical to or similarly closely related to any of the claims classified as invention 1.

Accordingly claims 8-19 cannot be identified as invention 1.

Meanwhile, claims 8-19 have the special technical feature wherein "the segments have the following surface roughnesses: the surface roughness of two circumferential end surfaces in which adjacent ones of the segments face each other is 6.3 μm or less; and the surface roughness of the inside of the pockets is Ra 1.6 μm or less"; thus these claims are classified as invention 2.

Form PCT/ISA/210 (continuation of first sheet) (January 2015)

**INTERNATIONAL SEARCH REPORT**

| International application No. |
| --- |
| **PCT/JP2023/038964** |

---

**Box No. III      Observations where unity of invention is lacking (Continuation of item 3 of first sheet)**

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **Claims 1-7**

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

---

Form PCT/ISA/210 (continuation of first sheet) (January 2015)

**INTERNATIONAL SEARCH REPORT**
Information on patent family members

International application No.

**PCT/JP2023/038964**

| Patent document cited in search report | | | Publication date (day/month/year) | Patent family member(s) | | | Publication date (day/month/year) |
|---|---|---|---|---|---|---|---|
| JP | 2014-139474 | A | 31 July 2014 | WO paragraphs [0002], [0012]-[0024], fig. 1-7 | 2014/098212 | A1 | |
| | | | | DE | 212013000259 | U1 | |
| | | | | CN | 104105893 | A | |
| JP | 2019-158082 | A | 19 September 2019 | (Family: none) | | | |
| JP | 2008-298272 | A | 11 December 2008 | US paragraphs [0104]-[0110], fig. 2-4 | 2009/0324410 | A1 | |
| | | | | WO | 2008/029796 | A1 | |
| | | | | EP | 2060806 | A1 | |
| | | | | CN | 101512169 | A | |
| JP | 2018-80747 | A | 24 May 2018 | WO paragraphs [0019]-[0037], fig. 1-11 | 2018/092612 | A1 | |
| JP | 2009-52746 | A | 12 March 2009 | (Family: none) | | | |
| JP | 2022-179448 | A | 02 December 2022 | WO paragraphs [0038]-[0085], fig. 1-21 | 2022/244872 | A1 | |
| JP | 2011-137530 | A | 14 July 2011 | WO entire text, all drawings | 2011/080961 | A1 | |

Form PCT/ISA/210 (patent family annex) (January 2015)

# EP 4 621 253 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009 A
- JP 52746 A
- JP 2009052746 A